# EUROPEAN PATENT APPLICATION

(11) **EP 3 858 805 A1**
(43) Date of publication of application: **04.08.2021**
(21) Application number: 19867222.2
(22) Date of filing: 20.08.2019
(51) Int. Cl.: C04B 41/63, B32B 37/15, C08F 290/06, E01D 22/00, E04G 23/02

(54) **STRUCTURE REPAIRING METHOD**

(30) Priority: 27.09.2018 JP 2018182972
(71) Applicant: Showa Denko K.K., Tokyo 105-8518 (JP)
(72) Inventor: OTANI, Kazuo, Tokyo 105-8518 (JP); UMINO, Atsushi, Tokyo 105-8518 (JP); KUROKI, Kunihiro, Tokyo 105-8518 (JP)
(74) Representative: Strehl Schübel-Hopf & Partner
(86) International application number: PCT/JP2019/032362
(87) International publication number: WO 2020/066363

(57) **Abstract**

Provided is a structure repairing method which, when applied to concrete structures, ensures a short construction period and high reliability in a wide temperature range. The structure repairing method includes a first repairing layer forming step of applying a radical-polymerizable resin composition (A) to a structure to form a first repairing layer, a second repairing layer forming step of applying a repairing material (X) containing a radical-polymerizable resin composition (Ax) and a filler (B) to the first repairing layer before the first repairing layer is cured, thereby forming a second repairing layer, and a repairing layer curing step of curing the radical-polymerizable resin composition (A) and the radical-polymerizable resin composition (Ax), wherein (A) and (Ax) each contain a radical-polymerizable resin (a1), a radical-polymerizable unsaturated monomer (a2), a hydroxy group-containing aromatic tertiary amine (a3), and an organic peroxide (a4), and the total content of (a1) and (a2) in each of (A) and (Ax) is 75% by mass or more.

## Description

### Technical Field

The present invention relates to a structure repairing method.

### Background Art

As a repairing method and a reinforcing method for broken or degraded parts of architectural buildings and civil structures, there are widely known a reinforced concrete lining construction method, a steel plate lining heavy construction method, a concrete filling construction method, and a carbon fiber construction method (for example, PTL 1 and PTL 2).

In recent civil engineering fields, aging of society's infrastructure consolidated in the period of high economic growth has become considered problematic, and especially in 2032, 65% of road bridges of 2 m or longer and 47% of tunnels will be more than 50 years old, and the problem of aging owing to long-term degradation is considered to grow into a more serious problem in future. Almost all such aged objects are those to be repaired that require repairing for aseismic reinforcement. Hereafter, there is fear that already-existing repairing construction methods could not meet the needs. Consequently, for meeting such needs, developing a rapid repairing construction method that may take a short construction period is strongly desired.

Also in construction fields, buildings not meeting the quake-resistance standards established before 1981 are now the time to be repaired. For repairing those objects, aseismic reinforcement is necessary, and in particular, in the urban space where buildings stand in knots, a reinforcing construction method that enables working in small spaces is desired. For such demands, the above-mentioned carbon fiber construction method is applicable, but sufficient investigations regarding the technique of shortening construction period are not as yet made.

In already-existing repairing construction methods, an epoxy resin is mainly used as a curable resin. However, since an epoxy resin could hardly cure in a low-temperature environment, a methyl methacrylate (MMA) resin and a vinyl ester (VE) resin have also been used in outdoor working in the winter season. An MMA resin and a VE resin can cure in radical polymerization, and as compared with that of an epoxy resin, the curing speed thereof is rapid and the resins can contribute toward reduction in construction period; however, even though using these resins, already-existing repairing construction methods could not sufficiently meet the current-day demand for further reduction in construction period.

As an invention that can meet such a demand for reduction in construction period, PTL 3 describes a composition containing a radical-polymerizable resin composition, a hydroxy group-containing aromatic tertiary amine, an organic peroxide and an inorganic filler, and a cross section repairing method using the composition. Here, the radical-polymerizable resin composition contains at least one radical-polymerizable resin among a vinyl ester resin, an urethane (meth)acrylate resin and a polyester (meth)acrylate resin, and a radical-polymerizable unsaturated monomer having two or more (meth)acryloyl groups in the molecule.

### Citation List

### Patent Literature

PTL 1: JP 2002-235444 A
PTL 2: JP 2005-336952 A
PTL 3: WO2016/133094

### Summary of Invention

### Technical Problem

In the cross section repairing method described in PTL 3, the composition containing an inorganic filler (cold curable cross section repairing material) is directly applied to the object to be repaired, but as known from Comparative Example 1 and Comparative Example 5 given hereinunder, the method still has room for improvement in point of adhesion strength.

Accordingly, the present invention is intended to provide a structure repairing method which, when applied to concrete structures, ensures a short construction period and high reliability in a wide temperature range.

### Solution to Problem

In order to attain the above-mentioned object, the constitution of the present invention is as follows.
[1] A structure repairing method including a first repairing layer forming step of applying a radical-polymerizable resin composition (A) to a structure to form a first repairing layer, a second repairing layer forming step of applying a repairing material (X) containing a radical-polymerizable resin composition (Ax) and a filler (B) to the first repairing layer before the first repairing layer is cured, thereby forming a second repairing layer, and a repairing layer curing step of curing the radical-polymerizable resin composition (A) and the radical-polymerizable resin composition (Ax); wherein the radical-polymerizable resin composition (A) and the radical-polymerizable resin composition (Ax) each contain at least one radical-polymerizable resin (a1) selected from the group consisting of a vinyl ester resin, an urethane (meth)acrylate resin and a polyester (meth)acrylate resin, at least one radical-polymerizable unsaturated monomer (a2) selected from the group consisting of a mono(meth)acrylate, a di(meth)acrylate and a tri(meth)acrylate, a hydroxy group-containing aromatic tertiary amine (a3) represented by the following general formula (I), and an organic peroxide (a4), the total content of the radical-polymerizable resin (a1) and the radical-polymerizable unsaturated monomer (a2) in each of the radical-polymerizable resin composition (A) and the radical-polymerizable resin composition (Ax) is 75% by mass or more, and both the radical-polymerizable resin compositions (A) and (Ax) do not contain a filler. 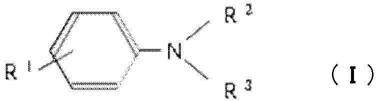
   In the general formula (I), R¹ represents H, CH₃ or OCH₃, R² represents a hydroxyalkyl group, R³ represents an alkyl group or a hydroxyalkyl group.
[2] The structure repairing method according to [1], wherein the radical-polymerizable resin composition (A) and the radical-polymerizable resin composition (Ax) have the same formulation.
[3] The structure repairing method according to [1] or [2], wherein the radical-polymerizable resin (a1) contains a vinyl ester resin, and the vinyl ester resin has an unsaturated bond bonding to at least any terminal of an epoxy polymer via an ester bond.
[4] The structure repairing method according to [3], wherein the unsaturated bond is at least one selected from the group consisting of a vinyl group, an allyl group, a (meth)acryloyl group, and a (meth)acryloyloxy group.
[5] The structure repairing method according to any of [1] to [4], wherein the radical-polymerizable resin (a1) contains an urethane (meth)acrylate resin, and the urethane (meth)acrylate resin is a polyurethane having a (meth)acryloyl group at least at any terminal in the molecule and produced through polymerization of a diisocyanate and a linear glycol.
[6] The structure repairing method according to any of [1] to [5], wherein the radical-polymerizable resin (a1) contains a polyester (meth)acrylate resin, and the polyester (meth)acrylate resin is a polyester produced from at least any one of an aromatic dicarboxylic acid and an aliphatic saturated dicarboxylic acid, and a diol, and has a (meth)acryloyl group at least at any terminal of the molecular chain.
[7] The structure repairing method according to any of [1] to [6], wherein in the radical-polymerizable resin composition (A), the content of the radical-polymerizable resin (a1) relative to the total amount of the radical-polymerizable resin (a1) and the radical-polymerizable unsaturated monomer (a2) is 5 to 90% by mass.
[8] The structure repairing method according to any of [1] to [7], wherein the radical-polymerizable resin composition (A) contains the hydroxy group-containing aromatic tertiary amine (a3) in an amount of 0.1 to 10% by mass, and the organic peroxide (a4) in an amount of 0.1 to 10% by mass.
[9] The structure repairing method according to any of [1] to [8], wherein the repairing material (X) contains the filler (B) in an amount of 80 to 500 parts by mass relative to 100 parts by mass of the radical-polymerizable resin composition (Ax).
[10] The structure repairing method according to any of [1] to [9], wherein the filler (B) is an inorganic filler.
[11] The structure repairing method according to any of [1] to [10], further including a step of forming a reinforcing layer that contains a curable resin composition (C) and a fibrous material (D) on the second repairing layer, after the repairing layer curing step.
[12] The structure repairing method according to [11], wherein the reinforcing step includes a first reinforcing layer forming step of applying a curable resin composition (C) to the second repairing layer to form a first reinforcing layer, a reinforcing fiber layer forming step of forming a reinforcing fiber layer that contains a fibrous material (D) on the second reinforcing layer, a second reinforcing layer forming step of applying a curable resin composition (C) to the reinforcing fiber layer to form a second reinforcing layer, and a reinforcing layer curing step of curing the curable resin composition (C) contained in the first reinforcing layer and the second reinforcing layer.
[13] The structure repairing method according to [11] or [12], wherein the curable resin composition (C) contains at least one selected from the group consisting of a vinyl compound and an epoxy compound.
[14] The structure repairing method according to any of [11] to [13], wherein the fibrous material (D) is a carbon fiber sheet.
[15] The structure repairing method according to any of [1] to [14], wherein the structure is a concrete structure.

### Advantageous Effects of Invention

According to the present invention, there can be provided a structure repairing method which, when applied to concrete structures, ensures a short construction period and high reliability in a wide temperature range.

### Brief Description of Drawings

Fig. 1 is a flowchart showing one example of a structure repairing method of a first embodiment of the present invention.
Fig. 2 is a flowchart showing one example of a structure repairing method of a second embodiment of the present invention.
Fig. 3 is a flowchart showing one example of a structure repairing method of a third embodiment of the present invention.
Fig. 4 is a view showing a method of a concrete adhesion test.

### Description of Embodiments

Embodiments of the structure repairing method of the present invention are described in detail hereinunder. The repairing method of the following embodiments is preferably applied to concrete structures, but may also be applied to working faces formed of any other asphalt concrete than concrete, as well as mortar, wood and metal. The structures are preferably architectural buildings and civil structures, and examples thereof include, though not limited thereto, columns, beams and slabs of architectural structures such as bridge columns, overhanging floorboards, and floor slabs, as well as tunnel linings, and outer walls of chimneys. Here, "repairing" means not only mending or repairing of degraded or broken parts but also includes reinforcement for undeteriorated or unbroken structures.

"Curing" means formation of a network-structure polymer through bonding by chemical reaction of molecules contained in a raw material. "Drying" means evaporation of a part of components contained in a mixture or a composition not accompanied by chemical reaction. Curing and drying may occur and run on simultaneously and, for example, a component not undergoing chemical reaction or a component formed through chemical reaction may evaporate with progression of curing.

"(Meth)acrylate" means acrylate or methacrylate; "(meth)acryl" means acryl or methacryl; and "(meth)acryloyl" means acryloyl or methacryloyl.

"Radical-polymerizable" means a property of a component contained in a composition to cure through radical polymerization under certain conditions, and examples of curing conditions include heating, and irradiation with light.

"Unsaturated bond" means a double bond or a triple bond between carbon atoms except carbon atoms that form an aromatic ring.

"Laitance layer" means a porous and brittle muddy film layer formed through precipitation of a component contained in concrete, on the surface of concrete.

"Workability" means easiness in applying the radical-polymerizable resin composition (A), the repairing material (X) and others to working faces.

### <1. First Embodiment>

### <1-1. Structure Repairing Method>

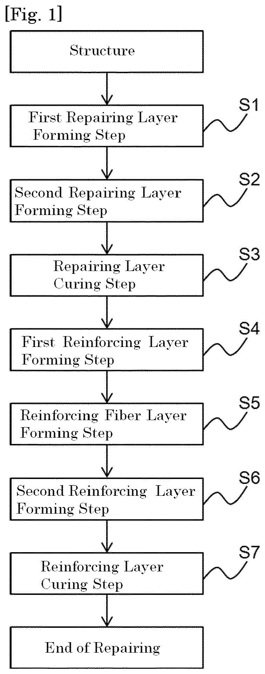

Fig. 1 is a flowchart showing one example of a structure repairing method of a first embodiment of the present invention. The repairing method of this embodiment includes a first repairing layer forming step S1, a second repairing layer forming step S2, a repairing layer curing step S3, a first reinforcing layer forming step S4, a reinforcing fiber layer forming step S5, a second reinforcing layer forming step S6, and a reinforcing layer curing step S7. Here, the first reinforcing layer forming step S4, the reinforcing fiber layer forming step S5, the second reinforcing layer forming step S6 and the reinforcing layer curing step S7 are collectively referred to as a reinforcing step. Hereinunder these steps are described. Details of specific examples of the radical-polymerizable resin composition (A), the radical-polymerizable resin composition (Ax), the filler (B), the repairing material (X), the curable resin composition (C) and the fibrous material (D) used in the present embodiment are not described here, and will be described hereunder.

In the first repairing layer forming step S1, a radical-polymerizable rein composition (A) is applied to the working face of a structure to form a first repairing layer thereon. Preferably, stains, deposits and brittle layers such as laitance layers are previously removed from the working face of a structure. Also preferably, working faces are subjected to substrate treatment for preparing them, prior to this step. Examples of substrate treatment include a polishing treatment for roughened or dirty surfaces of structures using a disc sander, a sand blaster, a water jet, etc. Through the treatment, the adhesion strength of the cured repairing layer, after formed by curing the repairing layer to be mentioned below, to the working face can be enhanced.

The repairing method of this embodiment may include a step of coating the working face with any other material, before the first repairing layer forming step S1. In this case, the repairing layer is indirectly formed on the working face via the coating layer of the other material. However, from the viewpoint of reduction in construction period, preferably, the method does not include the step of coating the working face with any other material. Namely, it is preferable that the repairing layer is directly formed on the working face. The repairing method of this embodiment secures a sufficient adhesion strength between the working face and the repairing layer, even though the working face is not coated with any other material, that is, when the repairing layer is directly formed on the working face.

Examples of the coating method with the radical-polymerizable resin composition (A) include, though not limited thereto, a spray coating method, a coating method using instruments such as a roller, a brush, or a spatula, and a dipping method. For sufficiently increasing the adhesion strength of the second repairing layer to be mentioned below, the coating amount of the first repairing layer is preferably 50 g/m² or more, more preferably 100 g/m² or more. For preventing the first repairing layer from dripping or flowing down before curing, the coating amount of the first repairing layer is preferably 500 g/m² or less, more preferably 400 g/m² or less, even more preferably 300 g/m² or less.

In the second repairing layer forming step S2, a repairing material (X) containing a radical-polymerizable resin composition (Ax) and a filler (B) is applied to the first repairing layer to form a second repairing layer thereon. Hereinunder the first repairing layer and the second repairing layer may be collectively referred to as a repairing layer. The second repairing layer forming step S2 is carried out before the radical-polymerizable resin composition (A) applied in the first repairing layer forming step S1 is cured. This is because, in that manner, the compatibility between the first repairing layer and the second repairing layer is bettered to increase the bonding strength of the cured repairing layer. In addition, the first repairing layer and the second repairing layer can be cured simultaneously and therefore the time necessary for curing can be shortened. The coating amount of the second repairing layer is preferably 5 to 30 kg/m², more preferably 10 to 25 kg/m², even more preferably 13 to 23 kg/m².

In the case where the radical-polymerizable resin composition (A) contained in the first repairing layer contains a volatile monomer, preferably, the second repairing layer is formed immediately after the first repairing layer forming step S1, for example, within 30 minutes after the first repairing layer forming step S1, more preferably within 10 minutes after the step.

In the case where the working face of a structure having a roughened surface is smoothed in the second repairing layer forming step S2, the second repairing layer forming step S2 may be called cleanfill. Examples of the coating method in this step include, though not limited thereto, a coating method using instruments such as a trowel, a roller, a brush, or a spatula, and a spray coating or dipping method.

In the repairing layer curing step S3, the radical-polymerizable resin compositions (A) and (Ax) contained in the repairing layer are cured. The curing method is not specifically limited, for which the working face may be covered with a curing sheet and left as such for a period of time enough to cure. Here, the time and the adequate temperature in leaving as such vary depending on the components and the formulation of the radical-polymerizable resin compositions (A) and (Ax). For example, in the case where the radical-polymerizable resin composition (A) and/or (Ax) contains a photopolymerization initiator, the curing may be promoted efficiently by irradiation with light. In this case, the wavelength range of light for irradiation can be appropriately determined depending on the components of the radical-polymerizable resin composition (A) and/or (Ax), especially the kind of the photopolymerization initiator. For confirming curing of the repairing layer, the layer may be checked for absence of finger mark by finger-touch, that is, no plastic deformation of the repairing layer may be confirmed by finger-touch check.

In the first repairing layer forming step S4, a curable resin composition (C) is applied to the cured repairing layer to form a first reinforcing layer thereon. Examples of the coating method in this step include, though not limited thereto, a spray coating method, a coating method using instruments such as a roller, a brush, or a spatula, and a dipping method. For sufficiently securing the adhesion strength of the fiber reinforcing layer to be formed in the next step, the coating amount of the first reinforcing layer is preferably 50 g/m² or more, more preferably 100 g/m² or more. For preventing the first reinforcing layer from dripping or flowing down before curing, the coating amount of the first reinforcing layer is preferably 500 g/m² or less, more preferably 400 g/m² or less, even more preferably 300 g/m² or less.

In the reinforcing fiber layer forming step S5, a reinforcing fiber layer is formed on the first reinforcing layer. One typical example of the reinforcing fiber layer forming method includes attaching a fiber sheet containing a fibrous material (D) to the first reinforcing layer, but not limited thereto, for example, individual fibers or bundles of plural fibers may be put on or attached to the first reinforcing layer. Details of the material and the morphology of the fibrous material (D) will be described hereunder. In the case where a fiber sheet is used as the fibrous material (D) contained in the reinforcing fiber layer, the number of the sheets is not limited to one, and plural sheets may be layered.

In the second reinforcing layer forming step S6, a curable resin composition (C) is applied to the reinforcing fiber layer to form a second reinforcing layer thereon. The coating method in this step and the range of the preferred coating amount of the second reinforcing layer are the same as in the first reinforcing layer forming step S4. Thereafter the first reinforcing layer, the reinforcing fiber layer and the second reinforcing layer may be collectively referred to as a reinforcing layer.

In the reinforcing layer curing step S7, the curable resin composition (C) contained in the reinforcing layer is cured. Not specifically limited, the curing method includes coating the working face with a curing sheet and left as such for a period of time enough to cure. Here, the time and the adequate temperature in leaving as such vary depending on the components and the formulation of the curable resin composition (C). For example, in the case where the curable resin composition (C) contains a photopolymerization initiator, the curing may be promoted efficiently by irradiation with light. In this case, the wavelength range of light for irradiation can be appropriately determined depending on the components of the curable resin composition (C), especially the kind of the photopolymerization initiator. For confirming curing of the reinforcing layer, the layer may be checked for absence of finger mark by finger-touch, that is, no plastic deformation of the reinforcing layer may be confirmed by finger-touch check.

### <1-2. Radical-Polymerizable Resin Composition (A)>

The radical-polymerizable resin composition (A) contains a radical-polymerizable resin (a1) a radical-polymerizable unsaturated monomer (a2), a hydroxy group-containing aromatic tertiary amine (a3) represented by the following general formula (I), and an organic peroxide (a4).

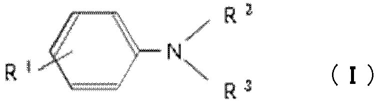

In the formula (I), R¹ represents H, CH₃ or OCH₃, R² represents a hydroxyalkyl group, R³ represents an alkyl group or a hydroxyalkyl group.

For sufficiently securing the strength of the radical-polymerizable resin composition (A) after curing, the total content of the radical-polymerizable resin (a1) and the radical-polymerizable unsaturated monomer (a2) in the radical-polymerizable resin composition (A) is 75% by mass or more, preferably 82% by mass or more, more preferably 90% by mass or more. The radical-polymerizable resin composition (A) does not contain a component corresponding to the filler (B) to be mentioned below.

### [1-2-1. Radical-Polymerizable Resin (a1)]

The radical-polymerizable resin (a1) contains at least one selected from the group consisting of a vinyl ester resin, an urethane (meth)acrylate resin and a polyester (meth)acrylate resin. Preferably, the radical-polymerizable resin (a1) contains at least one selected from the group consisting of a vinyl ester resin, an urethane (meth)acrylate resin and a polyester (meth)acrylate resin. Hereinunder the vinyl ester resin, the urethane (meth)acrylate resin and the polyester (meth)acrylate resin are individually described.

### (Vinyl Ester Resin)

The vinyl ester resin may be called an epoxy (meth)acrylate resin, and for example, it is an esterified product of an epoxy polymer and a carboxylic acid having one or plural unsaturated bonds or a derivative thereof. The carboxylic acid derivative includes a carboxylic acid halide, and a carboxylic acid anhydride. Namely, the vinyl ester resin is an epoxy compound polymer having an unsaturated bond bonding to at least any terminal of an epoxy polymer via an ester bond. Here, preferably, the unsaturated bond is at the terminal of the molecule, and is more preferably a vinyl group, an allyl group, a (meth)acryloyl group or a (meth)acryloyloxy group. Examples of such vinyl ester resins are described in "Polyester Resin Handbook (issued by Nikkan Kogyo Shimbun, Ltd, in 1988)", and "Dictionary of Paint Terms (edited by Japan Society of Color Material, issued in 1993)".

The epoxy compound used as a raw material for the vinyl ester resin is preferably a diepoxy compound, and examples thereof include a bisphenol A-type glycidyl ether and a novolak-type glycidyl ether. More specifically, the epoxy compound includes bisphenol A diglycidyl ether, hydrogenated bisphenol A diglycidyl ether, tetrabromobisphenol A diglycidyl ether, novolak-type diglycidyl ether, and cresol novolak-type diglycidyl ether. Other epoxy compounds include 1,6-hexanediol diglycidyl ether, 1,4-cyclohexanedimethanol diglycidyl ether, 5-norbornane-2,3-dimethanol diglycidyl ether, tricyclodecane dimethanol diglycidyl ether, alicyclic diepoxy carbonate, alicyclic diepoxy acetal, and alicyclic diepoxy carboxylate.

One alone or two or more kinds of these epoxy compounds may be used either singly or as mixed, but preferably, bisphenol A diglycidyl ether and a linear diglycidyl ether are mixed and used. This is for improving the flexibility and the toughness of the cured repairing layer. From this viewpoint, the epoxy compound is more preferably a mixture of bisphenol A diglycidyl ether and 1,6-hexanediol diglycidyl ether.

In the unsaturated bond-having carboxylic acid used as a raw material for the vinyl ester resin, preferably, two hydrogen atoms bond to one carbon atom that forms the unsaturated bond, that is, the unsaturated bond is at the terminal of the molecule, and more preferably, the unsaturated bond forms a vinyl group or an allyl group.

Examples of the monocarboxylic acid having one unsaturated bond include acrylic acid and methacrylic acid. Examples of the monocarboxylic acid having plural unsaturated bonds include half ester carboxylic acids to be produced through reaction of trimethylolpropane diallyl ether and phthalic anhydride or a derivative thereof. Examples of the derivative of phthalic anhydride include tetrahydrophthalic anhydride, methyl-tetrahydrophthalic anhydride, and endomethylene-tetrahydrophthalic anhydride. The tetrahydrophthalic anhydride is preferred. One alone or two or more kinds of these carboxylic acids may be used either singly or as mixed.

The unsaturated bond-having carboxylic acid may also be a dicarboxylic acid. The unsaturated bond-having dicarboxylic acid includes an esterified product produced by esterifying one carboxy group of a tricarboxylic acid such as citric acid with a compound having an unsaturated bond and a hydroxy group such as trimethylolpropane diallyl ether.

In the case where an unsaturated bond-having carboxylic acid derivative is used in place of the unsaturated bond-having carboxylic acid, halides such as chlorides or bromides of the above-mentioned carboxylic acid, or anhydrides of the above-mentioned carboxylic acid may be used.

For the purpose of controlling the crosslinking degree of the cured product, the vinyl ester resin may be such that a part of the terminal epoxy groups of an epoxy polymer to be a raw material are reacted with a carboxylic acid not having an unsaturated bond. Examples of the carboxylic acid not having an unsaturated bond include adipic acid, sebacic acid, and phthalic anhydride.

### (Urethane (Meth)acrylate Resin)

For example, the urethane (meth)acrylate resin can be produced by reacting a polyisocyanate and a polyol to give a polyurethane having an isocyanate group at the terminal, and reacting it with a hydroxy group-containing (meth)acrylate. In reacting with a hydroxy group-containing (meth)acrylate, a hydroxy group-containing allyl ether compound may be further added. Namely, the urethane (meth)acrylate resin is a polyurethane having a (meth)acryloyl group at least at any terminal in the molecule.

The method for synthesizing the urethane (meth)acrylate resin is not limited to only the above, and for example, the resin can also be produced by reacting a polyisocyanate and a polyol to give a polyurethane having a hydroxy group at the terminal, and reacting it with an isocyanate-containing (meth)acrylate.

Examples of the polyisocyanate to be used as a raw material for the urethane (meth)acrylate resin include 2,4-tolylene diisocyanate, 2,6-tolylene diisocyanate, 4,4'-diphenylmethane diisocyanate, hexamethylene diisocyanate, hydrogenated xylylene diisocyanate, isophorone diisocyanate, xylylene diisocyanate, dicyclohexylmethane diisocyanate, naphthalene diisocyanate, and triphenylmethane triisocyanate, and commercial products thereof include Millionate MT (by Nippon Polyurethane Industry Co., Ltd.), Burnock D-750 (by DIC Corporation), Crisvon NK (by DIC Corporation), Desmodur L (by Sumika Covestro Urethane Co., Ltd.), Coronate L (by Tosoh Corporation), Takenate D102 (by Mitsui Chemicals Inc.), Isonate 143L (by Mitsubishi Chemical Corporation), and Duranate (registered trademark) series (by Asahi Kasei Corporation). One alone or two or more kinds of these polyisocyanates may be used either singly or as mixed. The polyisocyanates for use herein are preferably diisocyanates, and among these, 4,4'-diphenylmethane diisocyanate is more preferred from the viewpoint of cost.

Examples of the polyol to be used as a raw material for the urethane (meth)acrylate resin include ethylene glycol, diethylene glycol, triethylene glycol, polyethylene glycol, propylene glycol, dipropylene glycol, polypropylene glycol, 2-methyl-1,3-propanediol, 1,3-butanediol, bisphenol A propylene oxide adduct, bisphenol A ethylene oxide adduct, 1,2,3,4-tetrahydroxybutane, glycerin, trimethylolpropane, 1,3-butanediol, 1,2-cyclohexaneglycol, 1,3-cyclohexaneglycol, 1,4-cyclohexaneglycol, paraxyleneglycol, bicyclohexyl-4,4-diol, 2,6-decalinglycol, and 2,7-decalinglycol. The polyol also includes a polyester polyol and a polyether polyol. More specifically, the polyol includes glycerin ethylene oxide adduct, glycerin propylene oxide adduct, glycerin tetrahydrofuran adduct, glycerin ethylene oxide propylene oxide adduct, trimethylolpropane ethylene oxide adduct, trimethylolpropane propylene oxide adduct, trimethylolpropane tetrahydrofuran adduct, trimethylolpropane ethylene oxide propylene oxide adduct, dipentaerythritol ethylene oxide adduct, dipentaerythritol propylene oxide adduct, dipentaerythritol tetrahydrofuran adduct, and dipentaerythritol ethylene oxide propylene oxide adduct. One alone or two or more kinds of these polyhydroxy compounds may be used either singly or as mixed. The polyol to be used here is preferably a linear glycol, more preferably a polypropylene glycol.

Examples of the hydroxy group-containing (meth)acrylate to be used as a raw material for the urethane (meth)acrylate resin include 2-hydroxyethyl (meth)acrylate, 2-hydroxypropyl (meth)acrylate, 3-hydroxybutyl (meth)acrylate, polyethylene glycol mono(meth)acrylate, polypropylene glycol mono(meth)acrylate, tris(hydroxyethyl)isocyanuric acid di(meth)acrylate, pentaerythritol tri(meth)acrylate, and glycerin (mono)(meth)acrylate, and commercial products thereof include Blemmer (registered trademark) series (by NOF Corporation). Among these (meth)acrylates, those having one hydroxy group and one (meth)acryloyl group in the molecule, that is, 2-hydroxyethyl (meth)acrylate, 2-hydroxypropyl (meth)acrylate, and 3-hydroxybutyl (meth)acrylate are preferred, and 2-hydroxypropyl (meth)acrylate is especially preferred. One alone or two or more kinds of these hydroxy group-containing (meth)acrylates can be used either singly or as mixed.

Examples of the hydroxy group-containing allyl ether compound to be used as a raw material for the urethane (meth)acrylate resin include ethylene glycol monoallyl ether, diethylene glycol monoallyl ether, triethylene glycol monoallyl ether, polyethylene glycol monoallyl ether, propylene glycol monoallyl ether, dipropylene glycol monoallyl ether, tripropylene glycol monoallyl ether, polypropylene glycol monoallyl ether, 1,2-butylene glycol monoallyl ether, 1,3-butylene glycol monoallyl ether, hexylene glycol monoallyl ether, octylene glycol monoallyl ether, trimethylolpropane diallyl ether, glycerin diallyl ether, and pentaerythritol triallyl ether. One alone or two or more kinds of these hydroxy group-containing allyl ether compounds may be used either singly or as mixed.

### (Polyester (Meth)acrylate Resin)

The polyester (meth)acrylate resin can be produced by reacting a (meth)acrylate having a hydroxy group or an epoxy group, with a polyester having a carboxy group at the terminal that is produced, for example, from a polycarboxylic acid and a polyol. The polyester (meth)acrylate resin can also be produced by reacting a polyester having a hydroxy group at the terminal that is produced, for example, from a polycarboxylic acid and a polyol, with a (meth)acrylic acid. Namely, the polyester (meth)acrylate resin is a polyester having a (meth)acryloyl group at least at any terminal of the molecular chain.

The polycarboxylic acid to be used as a raw material for the polyester (meth)acrylate resin is preferably at least one of an aromatic dicarboxylic acid and an aliphatic saturated dicarboxylic acid, more preferably an aromatic dicarboxylic acid. Examples of the aromatic dicarboxylic acid include phthalic acid, isophthalic acid, terephthalic acid, and anhydrides thereof. Examples of the aliphatic dicarboxylic acid include adipic acid, sebacic acid, and anhydrides thereof. One alone or two or more kinds of these polycarboxylic acids may be used either singly or as mixed.

The polycarboxylic acid to be used as a raw material for the polyester (meth)acrylate resin may also include an aliphatic unsaturated dicarboxylic acid, and examples of the aliphatic unsaturated dicarboxylic acid include fumaric acid, maleic acid, itaconic acid, tetrahydrophthalic acid, and anhydrides thereof. One alone or two or more kinds of these aliphatic unsaturated dicarboxylic acids may be used either singly or as mixed.

The polycarboxylic acid be used as a raw material for the polyester (meth)acrylate resin may also include any other polycarboxylic acid than the above-mentioned dicarboxylic acids, and the dicarboxylic acid and any other polycarboxylic acid than the dicarboxylic acid can also be combined and used.

The polyol to be used as a raw material for the polyester (meth)acrylate resin is preferably a diol, and examples thereof include ethylene glycol, propylene glycol, diethylene glycol, dipropylene glycol, 1,2-butanediol, 1,3-butanediol, 1,5-pentanediol, 1,6-hexanediol, 2-methyl-1,3-propanediol, 2,2-dimethyl-1,3-propanediol, cyclohexane-1,4-dimethanol, bisphenol A ethylene oxide adduct, and bisphenol A propylene oxide adduct. One alone or two or more kinds of these polyols may be used either singly or as mixed.

The epoxy group-having (meth)acrylate to be used as a raw material for the polyester (meth)acrylate resin is preferably one not having any other unsaturated bond than an α,β-unsaturated bond, more preferably one in which the number of the epoxy group contained in the molecule is one, for example, glycidyl methacrylate.

The hydroxy group-containing (meth)acrylate to be used as a raw material for the polyester (meth)acrylate resin includes the same compounds as those exemplified hereinabove as the hydroxy group-containing (meth)acrylate for use as a raw material for the above-mentioned urethane (meth)acrylate resin, and one alone or two or more kinds thereof may be used either singly or as mixed.

Examples of the (meth)acrylic acid to be used as a raw material for the polyester (meth)acrylate resin include acrylic acid, methacrylic acid, and itaconic acid. One alone or two or more kinds of these (meth)acrylic acids may be used either singly or as mixed.

Among the polyester (meth)acrylate resins to be produced from the above-mentioned raw materials, bisphenol A-type polyester (meth)acrylate resins are preferred, from the viewpoint of enhancing the mechanical strength (compression strength, hardness) of the cured repairing layer.

### (Content of Radical-Polymerizable Resin (a1))

The content ratio of the radical-polymerizable resin (a1) relative to the total amount of the radical-polymerizable resin (a1) and the radical-polymerizable unsaturated monomer (a2) is preferably 5 to 90% by mass, more preferably 8 to 70% by mass, even more preferably 15 to 70% by mass, further more preferably 30 to 50% by mass. When the content of the radical-polymerizable resin (a1) in the radical-polymerizable resin composition (A) falls within the range, good workability can be secured.

### [1-2-2. Radical-Polymerizable Unsaturated Monomer (a2)]

The radical-polymerizable unsaturated monomer (a2) is at least one selected from the group consisting of a mono(meth)acrylate, a di(meth)acrylate and a tri(meth)acrylate. Containing the radical-polymerizable unsaturated monomer (a2), the viscosity of the radical-polymerizable resin composition (A) can be appropriately reduced. In addition, the condition of the radical-polymerizable resin composition (Ax) to be mentioned below is the same as that of the radical-polymerizable resin composition (A), and accordingly, the viscosity of the repairing material (X) can also be reduced. Further, the hardness, the strength, the chemical resistance and the waterproofness of the cured repairing layer can also be enhanced.

The mono(meth)acrylate is not specifically limited. Examples of the mono(meth)acrylate include methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, amyl (meth)acrylate, hexyl (meth)acrylate, heptyl (meth)acrylate, 2-ethylhexyl (meth)acrylate, n-octyl (meth)acrylate, isooctyl (meth)acrylate, n-nonyl (meth)acrylate, isononyl (meth)acrylate, decyl (meth)acrylate, dodecyl (meth)acrylate, n-lauryl (meth)acrylate, tridecyl (meth)acrylate, stearyl (meth)acrylate, cyclohexyl (meth)acrylate, cyclopentyl (meth)acrylate, benzyl (meth)acrylate, dicyclopentenyl (meth)acrylate, dicyclopentenyloxyethyl (meth)acrylate, isobornyl (meth)acrylate, methoxyethyl (meth)acrylate, ethoxyethyl (meth)acrylate, butoxyethyl (meth)acrylate, phenoxyethyl (meth)acrylate, tetrahydrofurfuryl (meth)acrylate, 2-hydroxyethyl (meth)acrylate, 2-hydroxypropyl (meth)acrylate, and 4-hydroxybutyl (meth)acrylate. One alone or two or more kinds of these (meth)acrylate monomers may be used either singly or as mixed.

The di(meth)acrylate is not specifically limited. Examples of the di(meth)acrylate include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, ethoxylated bisphenol A di(meth)acrylate, tricyclodecane di(meth)acrylate, 1,10-decanediol di(meth)acrylate, 1,4-butanediol di(meth)acrylate, 1,6-hexanediol di(meth)acrylate, 1,9-nonanediol di(meth)acrylate, neopentyl glycol di(meth)acrylate, glycerin di(meth)acrylate, ethoxylated polypropylene glycol di(meth)acrylate, 2,2-bis[4-(methacryloyloxyethoxy)phenyl]propane, 2,2-bis[4-(methacryloyloxy-diethoxy)phenyl]propane, 2,2-bis[4-(methacryloyloxy-polyethoxy)phenyl]propane, 2,2-bis[4-(acryloyloxy-diethoxy)phenyl]propane, and 2,2-bis[4-(acryloxy-polyethoxy)phenyl]propane.

The tri(meth)acrylate is not specifically limited. Examples of the tri(meth)acrylate include trimethylolpropane tri(meth)acrylate, ethoxylated isocyanuric acid tri(meth)acrylate, ε-caprolactone-modified tris(2-acryloyloxyethyl) isocyanurate, and pentaerythritol tri(meth)acrylate.

From the viewpoint of workability and compression strength, the radical-polymerizable unsaturated monomer (a2) is preferably a methacrylate. Further, from the same viewpoint, especially preferably, the monomer contains at least one selected from the group consisting of dicyclopentenyloxyethyl methacrylate, methacryloylmorpholine, ethylene glycol dimethacrylate, diethylene glycol dimethacrylate, and trimethylolpropane trimethacrylate.

In addition to the above, dimethylolpropane tetra(meth)acrylate, ethoxylated pentaerythritol tetra(meth)acrylate, dipentaerythritol poly(meth)acrylate, and dipentaerythritol hexa(meth)acrylate can also be used within a range capable of attaining the object of the present invention.

### (Content of Radical-Polymerizable Unsaturated Monomer (a2))

The content ratio of the radical-polymerizable unsaturated monomer (a2) relative to the total amount of the radical-polymerizable resin (a1) and the radical-polymerizable unsaturated monomer (a2) is preferably 10% by mass or more. Falling within the range, not only the radical-polymerizable resin composition (A) can have a viscosity suitable for good workability even at a low temperature (for example, at -25°C), but also the composition can have good wettability to the filler (B) to be mentioned below. From this viewpoint, the content of the radical-polymerizable unsaturated monomer (a2) is more preferably 30% by mass or more, even more preferably 50% by mass or more. The content ratio of the radical-polymerizable unsaturated monomer (a2) relative to the total amount of the radical-polymerizable resin (a1) and the radical-polymerizable unsaturated monomer (a2) is preferably 95% by mass or less. Falling within the range, the cured repairing layer can maintain high strength and waterproofness. From this viewpoint, the content ratio of the radical-polymerizable unsaturated monomer (a2) is preferably 85% by mass or less, more preferably 70% by mass or less.

### [1-2-3. Hydroxyl Group-Containing Aromatic Tertiary Amine (a3)]

The hydroxy group-containing aromatic tertiary amine (a3) is represented by the following formula (I).

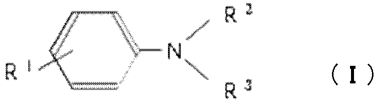

In the formula (I), R¹ represents H, CH₃ or OCH₃, and is preferably CH₃, more preferably CH₃ at the p-position. R² represents a hydroxyalkyl group, and is preferably a hydroxyalkyl group having 1 to 10 carbon atoms, more preferably a hydroxyalkyl group having 3 or less carbon atoms. R³ represents an alkyl group or a hydroxyalkyl group, and is preferably an alkyl group having 1 to 10 carbon atoms, or a hydroxyalkyl group having 1 to 10 carbon atoms, more preferably an alkyl group having 4 or less carbon atoms or a hydroxyalkyl group having 4 or less carbon atoms, even more preferably a hydroxyalkyl group having 4 or less carbon atoms.

The hydroxy group-containing aromatic tertiary amine (a3) represented by the general formula (I) is not specifically limited, and examples thereof include N-methyl-N-β-hydroxyethylaniline, N-butyl-N-β-hydroxyethylaniline, N-methyl-N-β-hydroxyethyl-p-toluidine, N-butyl-N-β-hydroxyethyl-p-toluidine, N-methyl-N-β-hydroxypropylaniline, N-methyl-N-β-hydroxypropyl-p-toluidine, N,N-di(β-hydroxyethyl)aniline, N,N-di(β-hydroxypropyl)aniline, N,N-di(β-hydroxyethyl)-p-toluidine, N,N-di(β-hydroxypropyl)-p-toluidine, N,N-diisopropyrrole-p-toluidine, and N,N-di(β-hydroxyethyl)-p-anisidine. Among these, N,N-di(B-hydroxyethyl)-p-toluidine, an N,N-di(β-hydroxypropyl)-p-toluidine are preferred from the viewpoint of low-temperature curability.

One alone or two or more kinds of these hydroxy group-containing aromatic tertiary amines (a3) may be used either singly or as combined.

### (Content of Hydroxy Group-Containing Aromatic Tertiary Amine (a3))

The content of the hydroxy group-containing aromatic tertiary amine (a3) in the radical-polymerizable resin composition (A) is preferably 0.1 to 10% by mass, more preferably 0.1 to 8.0% by mass, even more preferably 0.2 to 5.0% by mass. Containing the hydroxy group-containing aromatic tertiary amine (a3), the curing reaction of the radical-polymerizable resin composition (A) can be promoted to improve the workability thereof.

### [1-2-4. Organic Peroxide (a4)]

Combined with an amine such as the hydroxy group-containing aromatic tertiary amine (a3) or, in addition to such an amine, an optional component, metal soap to be mentioned below, the organic peroxide (a4) acts as a room-temperature radical polymerization initiator.

The organic peroxide (a4) is not specifically limited, and examples thereof include those grouped in ketone peroxides, peroxyketals, hydroperoxides, diallyl peroxides, diacyl peroxides, peroxyesters, and peroxydicarbonates. More specifically, the organic peroxide includes dibenzoyl peroxide, dicumyl peroxide, diisopropyl peroxide, di-t-butyl peroxide, 1,1-bis(t-butylperoxy)-3,3,5-trimethylcyclohexane, 2,5-dimethyl-2,5-bis(t-butylperoxy)hexyl-3,3-isopropyl hydroperoxide, t-butyl hydroperoxide, dicumyl hydroperoxide, acetyl peroxide, bis(4-t-butylcyclohexyl)peroxy dicarbonate, diisopropylperoxy dicarbonate, isobutyl peroxide, 3,3,5-trimethylhexanoyl peroxide, lauryl peroxide, benzoyl m-methylbenzoyl peroxide, m-toluoyl peroxide, methyl ethyl ketone peroxide, cumene hydroperoxide, and t-butyl peroxybenzoate. Among these, at least one selected from the group consisting of dibenzoyl peroxide, benzoyl m-methylbenzoyl peroxide, m-toluoyl peroxide, methyl ethyl ketone peroxide, cumene hydroperoxide and t-butyl peroxybenzoate is preferred.

One alone or two or more kinds of these organic peroxides (a4) may be used either singly or as mixed. Examples of the mixture of two or more kinds thereof include a mixture of dibenzoyl peroxide and benzoyl m-methylbenzoyl peroxide and m-toluoyl peroxide, a mixture of cumene hydroperoxide and t-butyl peroxybenzoate, and a mixture of cumene hydroperoxide and t-butyl peroxybenzoate and methyl ethyl ketone peroxide.

### (Content of Organic Peroxide (a4))

The content of the organic peroxide (a4) in the radical-polymerizable resin composition (A) is preferably 0.1% by mass or more, more preferably 0.5% by mass or more, even more preferably 1.0% by mass or more. For cost reduction and for increasing the strength of the cured repairing layer, the content of the organic peroxide (a4) is preferably 10.0% by mass or less, more preferably 8.0% by mass or less, even more preferably 6.0% by mass or less.

### [1-2-5. Optional Component]

The radical-polymerizable resin composition (A) may contain any other component than the above, as an optional component within a range not interfering with the effect of the present invention. Examples of the optional component include other monomers than the above (hereinafter these may be referred to as "other monomers") and amines, azo compounds, metal soaps, photopolymerization initiators, reinforcing materials, and various additives.

Examples of the other monomers include, though not limited thereto, (meth)acrylic acid, (meth)acryloylmorpholine, styrene, and styrene derivatives in which at least any hydrogen at α-, o-, m- or p-position of styrene is substituted with an alkyl group, a nitro group, a cyano group or an amide bond-having substituent, or an ester bond-containing substituent, other styrene-type monomers such as chlorostyrene, vinyltoluene, and divinylbenzene; and diene compounds such as butadiene, 2,3-dimethylbutadiene, isoprene, and chloroprene. As the other monomer, also usable are condensation products of an unsaturated fatty acid such as maleic acid, fumaric acid, or itaconic acid, and an alcohol. One alone or two or more kinds of these may be used either singly or as combined. As the other monomer, those having a (meth)acryloyl group are preferred, and those having an acryloyl group are more preferred.

The optional component, amine includes an aromatic tertiary amine except the hydroxy group-containing aromatic tertiary amine (a3), for example, an aromatic tertiary amine not containing a hydroxy group. Examples of the optional component include dimethylaniline and dimethyl-paratoluidine. One alone or two or more kinds of these may be used either singly or as combined.

In the case where the radical-polymerizable resin composition (A) contains an amine of an optional component, the content of the amine of an optional component in the radical-polymerizable resin composition (A) is preferably 0.01 to 5.0% by mass, more preferably 0.1 to 3.0% by mass. Containing an amine of an optional component, polymerization of the components contained in the radical-polymerizable resin component (A) can be promoted as a result of decomposition of the organic peroxide (a4) through contact of the peroxide with the amine of an optional component, and the surface drying performance and the curability of the repairing layer can be thereby more enhanced.

Examples of the azo compound include azobisisobutyronitrile, and azobiscarbonamide. One alone or two or more kinds of these may be used either singly or as combined. In the case where the radical-polymerizable resin composition (A) contains an azo compound, the content of the azo compound in the radical-polymerizable resin composition (A) is not specifically limited, but is preferably 0.1 to 5.0% by mass, more preferably 0.5 to 3.0% by mass. Containing an azo compound, the surface of the repairing layer can efficiently cure. When azobisisobutyronitrile or azobiscarbonamide is used as the azo compound, the compound can also promote polymerization of the components contained in the radical-polymerizable resin composition (A).

Examples of the metal soap include cobalt octylate, manganese octylate, zinc octylate, vanadium octylate, cobalt naphthenate, copper naphthenate, and barium naphthenate, and above all, cobalt octylate, manganese octylate and cobalt naphthenate are preferred, and cobalt octylate is more preferred. In the case where the radical-polymerizable resin composition (A) contains a metal soap, the content of the metal soap on the radical-polymerizable resin composition (A) is not specifically limited, but is preferably 0.1 to 10.0% by mass, more preferably 0.3 to 5.0% by mass. Containing a metal soap, polymerization of the components contained in the radical-polymerizable resin component (A) can be promoted as a result of decomposition of the organic peroxide (a4) through contact of the peroxide with the metal salt, and the curability of the repairing layer can be thereby more enhanced.

The photopolymerization initiator is preferably one having photosensitivity in a region of visible light to near IR ray, and specifically, one example thereof is Irgacure (registered trademark) 1800 (by BASF SE).

In the case where the radical-polymerizable resin composition (A) contains a photopolymerization initiator, the content of the photopolymerization initiator in the radical-polymerizable resin composition (A) is not specifically limited, but is preferably 0.01 to 15% by mass, more preferably 0.05 to 10% by mass. The photopolymerization initiator can shorten the curing time while preventing degradation of other physical properties.

Examples of the reinforcing material include short fibers of polyesters, vinylon, carbon, ceramics or stainless steel. One alone or two or more kinds of these reinforcing materials can be used either singly or as mixed. In the case where the radical-polymerizable resin composition (A) contains a reinforcing material, the content of the reinforcing material in the radical-polymerizable resin composition (A) is not specifically limited, but is preferably 0.1 to 10% by mass, more preferably 0.01 to 2.0% by mass. Containing a reinforcing material, the strength and the durability of the repaired structures can be enhanced.

Various additives include wax, polymerization inhibitors, coupling agents, curing accelerators, thixotropic agents and solvents.

Examples of wax include, though not limited thereto, petroleum wax (paraffin wax, microcrystalline), vegetable wax (candelilla wax, rice wax, Japan wax), animal wax (beeswax, spermaceti), mineral wax (montan wax), and synthetic wax (polyethylene wax, amide wax). More specifically, there is mentioned a paraffin wax having a melting point of 20°C to 80°C or so, and commercial products thereof include Paraffin Wax 115°F and Paraffin Wax 125°F (by Nippon Seiro Co., Ltd.), and BYK(registered trademark)-S-750, BYK(registered trademark)-S-740, and BYK(registered trademark)-LP-S6665 (by BYK Japan KK). One alone or two or more kinds of these waxes can be used either singly or as mixed, and for example, waxes each having a different melting point can be combined and used.

In the case where the radical-polymerizable resin composition (A) contains wax, the content of wax in the radical-polymerizable resin composition (A) is not specifically limited, but is preferably 0.1 to 5.0% by mass, more preferably 0.1 to 2.0% by mass. Containing wax, the drying time for the composition can be shortened.

The polymerization inhibitor includes hydroquinone, methylhydroquinone, trimethylhydroquinone, tert-butyl catechol, and 2,6-di-tertiary butyl-4-methylphenone.

In the case where the radical-polymerizable resin composition (A) contains a polymerization inhibitor, the content of the polymerization inhibitor in the radical-polymerizable resin composition (A) is not specifically limited, but is preferably 0.001 to 1.0% by mass, more preferably 0.005 to 0.5% by mass. The polymerization inhibitor can retard the progression of curing and can secure a working time.

The coupling agent is preferably a silane coupling agent such as aminosilane, vinylsilane, epoxysilane or acrylsilane. One alone or two or more kinds of these coupling agents may be used either singly or as mixed.

In the case where the radical-polymerizable resin composition (A) contains a coupling agent, the content of the coupling agent in the radical-polymerizable resin composition (A) is not specifically limited, but is preferably 0.01 to 10% by mass, more preferably 0.1 to 5.0% by mass. The coupling agent can enhance the strength of the cured repairing layer.

Not specifically limited, the curing accelerator includes β-diketone compounds such as acetylacetone, ethyl acetoacetate, α-acetyl-γ-butyrolactone, N-pyrrolidinoacetoacetamide, and N,N-dimethylacetoacetamide. One alone or two or more of these curing accelerators may be used either singly or as mixed.

In the case where the radical-polymerizable resin composition (A) contains a curing accelerator, the content of the curing accelerator in the radical-polymerizable resin composition (A) is not specifically limited, but is preferably 0.01 to 10% by mass, more preferably 0.1 to 5.0% by mass. The curing accelerator can shorten the curing time for the repairing layer.

Regarding the thixotropic agent, examples of inorganic thixotropic agents include hydrophobic fumed silica (Cabosil TS-720 by Cabot Corporation), and hydrophilic fumed silica (Aerosil (registered trademark) 200 by Nippon Aerosil Co., Ltd.). Examples of organic thixotropic agents include polyethylene flocculent fibers ("Kemibesto" by Mitsui Chemicals, Inc.), and hydrogenated castor oil. Above all, hydrophobic silica and hydrophilic silica, and Kemibesto are preferred. One alone or two or more kinds of these thixotropic agents can be used either singly or as mixed. In particular, hydrophilic silica can be used together with a thixotropic aid such as BYK (registered trademark) R605 (by BYK Japan KK).

In the case where the radical-polymerizable resin composition (A) contains a thixotropic agent, the content of the thixotropic agent in the radical-polymerizable resin composition (A) is not specifically limited, but is preferably 0.1 to 10% by mass, more preferably 0.2 to 5.0% by mass. The thixotropic agent can impart good thixotropic nature and improves workability.

Not specifically limited, examples of the solvent include alkyl ether acetates such as ethyl acetate; ethers such as tetrahydrofuran; ketones such as acetone, methyl ethyl ketone, methyl isobutyl ketone, and cyclohexanone; hydrocarbons such as benzene, toluene, xylene, octane, decane, and dodecane; petroleum solvents such as petroleum ether, petroleum naphtha, hydrogenated petroleum naphtha, and solvent naphtha; lactates such as methyl lactate, ethyl lactate, and butyl lactate; and dimethylformamide, and N-methylpyrrolidone. One alone or two or more kinds of these solvents may be used either singly or as mixed. In particular, when a hydrocarbon solvent such as those described in JP 2002-97233 A, for example, n-hexane, cyclohexane, pentane, trimethylbenzene, butylbenzene or pentyl benzene, is used as combined with wax, a wax film can be rapidly formed in curing the radical-polymerizable resin composition (A) to improve drying performance of the composition.

In the case where the radical-polymerizable resin composition (A) contains a solvent, the content of the solvent in the radical-polymerizable resin composition (A) is not specifically limited, but is preferably 0.1 to 10% by mass, more preferably 0.1 to 5.0% by mass. The solvent can control the viscosity of the radical-polymerizable resin composition (A) to fall within a range suitable for working, and when used along with wax, especially paraffin wax, the solvent can improve the solubility and the dispersibility of wax.

### [1-2-6. Preparation Method and Viscosity of Radical-Polymerizable Resin Composition (A)]

The preparation method for the radical-polymerizable resin composition (A) is not specifically limited, for which, preferably, the constituent components are weighed, and mixed with a homomixer or a hand mixer. Preferably, the components are mixed with a homomixer. From the viewpoint of securing homogeneous curing reaction, preferably, the radical-polymerizable resin (a1) and the radical-polymerizable unsaturated monomer (a2) are previously mixed before the other components are added. After the hydroxy group-containing aromatic tertiary amine (a3) and the organic peroxide (a4) are blended, preferably, the radical-polymerizable resin composition (A) is immediately used before curing of the composition runs on.

The viscosity of the radical-polymerizable resin composition (A) is preferably 150 mPa·s or less at 25°C. The condition of the radical-polymerizable resin composition (Ax) to be mentioned below is the same as the radical-polymerizable resin composition (A), and when the viscosity of the radical-polymerizable resin composition (Ax) falls within the range, the kneadability with the filler (B) to prepare the repairing material (X), or the workability in applying the radical-polymerizable resin composition (A) and the repairing material (X) can be prevented from being worsened even at a low temperature (for example, 5°C or lower). From this viewpoint, the viscosity of the radical-polymerizable resin composition (A) at 25°C is more preferably 100 mPa·s or less. The viscosity of the radical-polymerizable resin composition (A) at 25°C is preferably 10 mPa·s or more. It is for preventing the radical-polymerizable resin composition (A) before curing from flowing in applying to a slanted surface or a vertical surface.

### <1-3. Repairing Material (X)>

The repairing material (X) contains a radical-polymerizable resin composition (Ax) and a filler (B). The condition of the radical-polymerizable resin composition (Ax) is the same as that of the radical-polymerizable resin composition (A), and is as mentioned above. The radical-polymerizable resin composition (Ax) may be the same as or different from the radical-polymerizable resin composition (A), but preferably, the radical-polymerizable resin composition (Ax) and the radical-polymerizable resin composition (A) have the same formulation. This is for preventing cost increase owing to increase in the kinds of materials and for enhancing the compatibility between the radical-polymerizable resin composition (A) as the first repairing layer and the repairing material (X) as the second repairing layer to thereby enhance the adhesion strength therebetween. The radical-polymerizable resin composition (Ax) does not include the components corresponding to the filler (B) to be described hereinunder.

### [1-3-1. Filler (B)]

The filler (B) acts as aggregate. The filler (B) is preferably an inorganic filler. Examples of the inorganic filler include talc, calcium carbonate, alumina, aluminum hydroxide, aluminum, titanium, silica sand, and silica stone. Among these, at least one selected from the group consisting of talc, calcium carbonate, silica sand and silica stone is preferably contained, and from the viewpoint of cost and material availability, at least one selected from the group consisting of calcium carbonate, silica sand and silica stone is more preferably contained, and above all, at least any one of calcium carbonate and silica sand is preferably contained. One alone or two or more kinds of these inorganic fillers may be used either singly or as combined.

The average particle diameter D of the filler (B) is preferably 1 nm to 5000 µm, more preferably 10 nm to 2000 µm, even more preferably 100 nm to 2000 µm. Falling within the range, the workability and the physical properties of the repairing material (X) can be improved. Here, the average particle size D (µm) is represented by D = {κ/(ρS)} × 10⁴, using the specific surface area S (cm²/g) of the particles determined according to an air permeability method and the true density ρ(g/cm³) of the particles. Here, κ is a shape factor, and here, the particles are considered to be spherical, that is, κ = 6 in calculation.

The content of the filler (B) in the repairing material (X) is preferably 80 to 500 parts by mass relative to 100 parts by mass of the radical-polymerization resin composition (Ax). Falling within the range, the radical-polymerization resin composition (Ax) contained in the repairing material (X) can fully cure and good workability can be secured. From this viewpoint, the content of the filler (B) is more preferably 120 to 450 parts by mass relative to 100 parts by mass of the radical-polymerization resin composition (Ax), even more preferably 150 to 450 parts by mass.

The total content of the filler (B) and the radical-polymerization resin composition (Ax) in the repairing material (X) is preferably 80% by mass or more, more preferably 90% by mass or more, even more preferably 95% by mass or more, and is, for example, 100% by mass.

### [1-3-2. Optional Components]

The repairing material (X) may contain any other optional component than the radical-polymerization resin composition (Ax) and the filler (B), within a range not interfering with the effect of the present invention. The optional components are the same as those described in the section 1-2-5.

### [1-3-3. Preparation Method for Repairing Material (X)]

The preparation method for the repairing material (X) is not specifically limited, and the repairing material can be prepared by weighing the above-mentioned components, and blending and mixing them. The radical-polymerization resin composition (Ax) cures rapidly, and therefore, it is desirable that, after the radical-polymerization resin composition (Ax) is prepared, the filler (B) is immediately mixed and the resultant material is used for the intended purpose.

The cured product of the repairing material (X) (cured second repairing layer) is preferably such that, in a test according to JIS K6911 "General Test Method for Thermosetting Plastics", the compression strength after 24 hours is 20 MPa or more, more preferably 30 MPa or more, even more preferably 60 MPa or more. When the compression strength after 24 hours of the cured product falls within the above range, the repairing layer cured through freezing and thawing after construction according to the present construction method can still maintain good performance.

The repairing material (X) can cure within a short period of time even in a low temperature environment at -25°C or lower. Consequently, the repairing material (X) is excellent in workability, and the cured repairing layer formed of the repairing material (X) is excellent also in strength expressibility.

### <1-4. Curable Resin Composition (C)>

The curable resin composition (C) contains a curable compound. The curable compound is preferably at least one of a vinyl compound and an epoxy compound. Above all, from the viewpoint of shortening the curing time and enhancing the adhesion strength between the cured repairing layer and the cured reinforcing layer, more preferably, the composition contains a vinyl compound as the curable compound.

In the case where the curable resin composition (C) contains a vinyl compound, the vinyl compound is a radical-polymerizable resin and a radical-polymerizable unsaturated monomer. In this case, preferred components for the radical-polymerizable resin in the vinyl compound are the same as those of the radical-polymerizable resin (a1) in the radical-polymerization resin composition (A), and preferred components for the radical-polymerizable unsaturated monomer (a2) are the same as those of the radical-polymerizable unsaturated monomer (a2) in the radical-polymerization resin composition (A). A preferred range of the compositional ratio of the radical-polymerizable resin to the radical-polymerizable unsaturated monomer in the vinyl compound is the same as that of the compositional ratio of the radical-polymerizable resin (a1) to the radical-polymerizable unsaturated monomer (a2) in the radical-polymerization resin composition (A).

In the case where the curable resin composition (C) contains a vinyl compound, preferably, the curable resin composition (C) further contains an organic peroxide. In this case, a preferred range of the content of the organic peroxide (a4) in the radical-polymerization resin composition (A) is the same as in the radical-polymerization resin composition (A).

In the case where the curable resin composition (C) contains a vinyl compound, the curable resin composition (C) may contain a hydroxy group-containing aromatic tertiary amine represented by the above-mentioned general formula (I). Preferred components of the hydroxy group-containing aromatic tertiary amine are the same as in the radical-polymerization resin composition (A). If desired, the curable resin composition (C) may further contain optional components that may be contained in the radical-polymerization resin composition (A), that is, the components described in the section 1-2-5. The curable resin composition (C) may have the same formulation as that of the radical-polymerization resin composition (A) used for forming the repairing layer.

In the case where the curable resin composition (C) contains an epoxy compound, the curable resin composition (C) contains a curing agent in addition to the epoxy compound. If desired, the composition may contain a diluent.

In the case where the curable resin composition (C) contains an epoxy compound, the epoxy compound is a compound having at least two epoxy groups in the molecule. Examples of such an epoxy compound include an ether-type bisphenol-type epoxy resin, a novolac-type epoxy resin, a polyphenol-type epoxy resin, an aliphatic epoxy resin, an ester-type aromatic epoxy resin, a cyclic aliphatic epoxy resin, and an ether/ester-type epoxy resin. One alone or two or more kinds of these epoxy resins may be used either singly or as mixed.

In the case where the curable resin composition (C) contains an epoxy compound, an amine having 2 or more amino groups in the molecule, an imidazole, an imidazole derivative, an imine or a polyamide can be sued as a curing agent. Above all, an aliphatic amine is preferred as enabling curing at room temperature. The aliphatic amine having 2 or more amino groups in the molecule includes ethylenediamine, 1,2-propanediamine, 1,3-propanediamine, 1,4-butanediamine, hexamethylenediamine, 2,5-dimethyl-2,5-hexanediamine, 2,2,4-trimethylhexamethylenediamine, diethylenetriamine, triethylenetetramine, tetraethylenepentamine, pentaethylenehexamine, 4-aminomethyloctamethylenediamine, 3,3'-imino bis (propylamine), 3,3'-methyliminobis(propylamine), bis(3-aminopropyl) ether, 1,2-bis(3-aminopropyloxy)ethane, mencenediamine, isophoronediamine, bisaminomethylnorbornane, bis(4-aminocyclohexyl)methane, bis(4-amino-3-methylcyclohexyl)methane, 1,3-diaminocyclohexane, and 3,9-bis(3-aminopropyl)-2,4,8,10-tetraoxaspiro[5,5]undecane. One alone or two or more kinds of these curing agents may be used either singly or as mixed. The amount of the curing agent to be added is preferably controlled in accordance with the epoxy equivalent of the main ingredient, epoxy resin. Specifically, it is preferable that the amount of the curing agent to be added is appropriately controlled so as to be an amine equivalent corresponding to the epoxy equivalent of the main ingredient.

In the case where the curable resin composition (C) contains an epoxy compound, an epoxy group-having compound having a low viscosity can be used as a diluent, for the purpose of controlling the viscosity of the curable resin composition (C). The usable diluent is not specifically limited, and examples thereof include butyl glycidyl ether, 2-ethylhexyl glycidyl ether, phenyl glycidyl ether, polyethylene glycol diglycidyl ether, polypropylene glycol diglycidyl ether, 1,6-hexanediol diglycidyl ether, cyclohexane dimethanol diglycidyl ether, glycerin triglycidyl ether, trimethylolethane triglycidyl ether, and neopentyl glycol diglycidyl ether. One alone or two or more kinds of these diluents may be used either singly or as mixed.

### <1-5. Fibrous Material (D)>

Examples of the fibers contained in the fibrous material (D) include carbonaceous fibers such as carbon fibers, graphite fibers and graphite whiskers, as well as glass fibers, aramid fibers, and polyester fibers. Carbon fibers are preferred. Examples of the carbon fibers include those produced from raw materials of polyacrylonitrile fibers, cellulose fibers, pitch, aromatic hydrocarbons or carbon black. One alone or two or more kinds of these fibrous materials may be used either singly or as mixed.

Forms of the fibrous material (D) include, though not limited thereto, a nonwoven fabric, and a tape, a sheet, a mat or a woven fabric of fibers aligned in a certain direction. In addition to the above-mentioned fibers, the fibrous material (D) may also be one prepared through impregnation with a thermosetting resin, such as a prepreg sheet.

### <2. Second Embodiment>

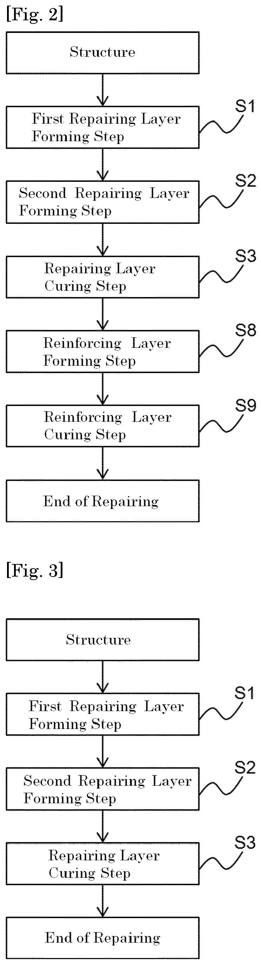

Fig. 2 is a flowchart showing one example of a structure repairing method of a second embodiment of the present invention. The repairing method of this embodiment includes a first repairing layer forming step S1, a second repairing layer forming step S2, a repairing layer curing step S3, a reinforcing layer forming step S8 and a reinforcing layer curing step S9. Here, the reinforcing layer forming step S8 and the reinforcing layer curing step S9 are collectively referred to as a reinforcing step. The first repairing layer forming step S1, the second repairing layer forming step S2, and the repairing layer curing step S3 are the same as in the first embodiment, and description thereof is omitted here. Details of the radical-polymerizable resin composition (A), the filler (B) and the repairing material (X) are as described in the section of the first embodiment.

In the reinforcing layer forming step S8, a reinforcing sheet is stuck to the cured repairing layer to form a reinforcing layer. Examples of the reinforcing sheet include those prepared by impregnating fibers such as a woven fabric or a nonwoven fabric of the fibrous material (D) with a thermosetting or photocurable resin, but not limited thereto, any one containing a fibrous material and a curable resin is employable as the reinforcing sheet.

In the reinforcing layer curing step S9, the resin contained in the reinforcing sheet to form the reinforcing layer is cured. The curing condition may vary depending on the resin contained in the reinforcing sheet. When the resin is a thermosetting resin, it may be kept at an appropriate temperature for efficiently curing the resin, and when the resin is a photocurable resin, it may be irradiated with light having a wavelength range for efficiently curing the resin for sufficient time. For confirming curing of the reinforcing sheet, the sheet may be checked for absence of finger mark by finger-touch, that is, no plastic deformation of the reinforcing layer may be confirmed by finger-touch check.

### <3. Third Embodiment>

Fig. 3 is a flowchart showing one example of a structure repairing method of a third embodiment of the present invention. The repairing method of this embodiment includes a first repairing layer forming step S1, a second repairing layer forming step S2, and a repairing layer curing step S3. The first repairing layer forming step S1, the second repairing layer forming step S2, and the repairing layer curing step S3 are the same as in the first embodiment and the second embodiment.

### Examples

Hereinunder the present invention is described in more detail with reference to Examples, but the invention is not limited to these.

### <1. Synthesis of Radical-Polymerizable Resin (a1)>

A vinyl ester resin (a1-1), an urethane methacrylate resin (a1-2) and a polyester methacrylate resin (a1-3) were synthesized as follows.

### <1-1. Vinyl Ester Resin (a1-1)>

In a reactor equipped with a stirrer, a reflux condenser, a gas introducing tube and a thermometer, 151 g of a bisphenol A-type epoxy resin (product name "Epomik (trademark) R140P" by Mitsui Chemicals, Inc., epoxy equivalent 189), 188 g of 1,6-hexanediol diglycidyl ether (product name "SR-16" by Sakamoto Yakuhin Kogyo Co., Ltd., epoxy equivalent 157), 129 g of trimethylolpropane diallyl ether (product name "Neoallyl (trademark) T-20" by Osaka Soda Co., Ltd.), 91 g of tetrahydrophthalic anhydride (product name "Rikacid TH" by New Japan Chemical Co., Ltd.), and 145 g of dicyclopentenyloxyethyl methacrylate (a2-1) (product name "Fancryl FA-512MT" by Showa Denko Materials Co., Ltd.) were put, and heated up to 90°C. While the temperature was kept as such, 1.0 g of 2,4,6-tris(dimethylaminomethyl)phenol (product name "Seikuol TDMP" by Seiko Chemical Co., Ltd.) and 0.3 g of methylhydroquinone (by Tokyo Chemical Industry Co., Ltd.) were added, and heated up to 110°C and reacted with an air stream kept blowing therethrough. In one hour after the start of the reaction, the acid value reached 25 mgKOH/g. At that time, 120 g of methacrylic acid (by Kuraray Co., Ltd.) and 1.0 g of 2,4,6-tris(dimethylaminomethyl)phenol were added and heated up to 130°C. The acid value was measured based on the neutralization titration method described in JIS K 0070:1992, Section 3.1 (the same shall apply to acid value measurement hereinunder). In the method, a small amount (about 0.1 mL) of the reaction liquid was sampled for the measurement, and the sampled amount does not have any influence on the total amount (the same shall apply to acid value measurement hereinunder). The reaction was kept continued while the temperature was kept as such, and in 4 hours after the temperature reached 130°C, the acid value was 14 mgKOH/g. At that time, the reaction was finished to give a mixture containing 679 g of vinyl ester resin (a1-1) and 145 g of dicyclopentenyloxyethyl methacrylate (a2-1).

### <1-2. Urethane Methacrylate Resin (a1-2)>

In a reactor equipped with a stirrer, a reflux condenser, a gas introducing tube and a thermometer, 226 g of 4,4'-diphenylmethane diisocyanate (product name "Millionate MT" by Nippon Polyurethane Industry Co., Ltd.), 610 g of polypropylene glycol (by Showa Chemical Industry Co., Ltd., number-average molecular weight 1000), 320 g of acryloylmorpholine (a2-2), 576 g of methoxyethyl methacrylate (a2-3) (product name "Acryester MT" by Mitsubishi Chemical Corporation) and 0.3 g of hydroquinone were put, and heated up to 60°C while an air stream was kept blowing therethrough. The temperature was kept as such, and 0.02 g of a polymerization catalyst, dibutyltin dilaurate (product name "KS-1260" by Kyodo Chemical Company Limited.) was added. Subsequently, this was heated up to 70°C, and reacted. As a result of infrared absorption spectrometry (IR photometry), when there was seen no change in the intensity ratio of the peak at a wavelength of 2270 cm⁻¹ derived from the isocyanate group to the peak at a wavelength of 1730 cm⁻¹ derived from the urethane bond, 91 g of 2-hydroxypropyl methacrylate (product name "Light Ester HOP", by Kyoeisha Chemical Co., Ltd.) and then 0.06 g of a catalyst, dibutyltin dilaurate were added, and heated up to 75°C and reacted. As a result of IR photometry, disappearance of the peak at a wavelength of 2270 cm⁻¹ derived from the isocyanate group was confirmed, and the reaction was finished to give a mixture containing 927 g of urethane methacrylate resin (a1-2), 320 g of acryloylmorpholine (a2-2), and 576 g of methoxyethyl methacrylate (a2-3).

### <1-3. Polyester Methacrylate Resin (a1-3)>

In a reactor equipped with a stirrer, a reflux condenser, a gas introducing tube and a thermometer, 604 g of dipropylene glycol (by Tokyo Chemical Industry Co., Ltd.) and 1080 g of isophthalic acid (by Tokyo Chemical Industry Co., Ltd.) were put, heated up to 205°C in a nitrogen gas atmosphere and reacted for 3 hours, and then cooled down to 100°C. Next, in air, 0.6 g of methylhydroquinone and 498 g of glycidyl methacrylate (product name "Blemmer G" by NOF Corporation) were added thereto, and reacted at 120°C to 130°C for 2 hours to give a mixture containing 2182 g of polyester methacrylate resin (a1-3).

### <2. Mixing of Radical-Polymerizable Resin (a1) and Radical-Polymerizable Unsaturated Monomer (a2)>

The components shown in Table 1 were mixed each in an amount indicated therein to give mixtures VE1, VE2 and VE3 each containing the vinyl ester (a1-1), a mixture UA1 containing the urethane methacrylate resin (a1-2) and a mixture PMA1 containing the polyester methacrylate resin (a1-3). The amount added with "*" of the component, radical-polymerizable unsaturated monomer (a2) includes the corresponding component added in synthesizing the radical-polymerizable resin (a1).

**Table 1**

| Mixture | | VE1 | VE2 | VE3 | UA1 | PMA1 |
|---|---|---|---|---|---|---|
| Radical-Polymerizable Resin (a1) | Vinyl Ester Resin (a1-1) [g] | 679 | 679 | 679 | - | - |
| | Urethane Methacrylate Resin (a1-2) [g] | - | - | - | 927 | - |
| | Polyester Methacrylate Resin (a1-3)[g] | - | - | - | - | 2182 |
| Proportion [% by mass] of (a1) to (a1) + (a2) | | 38.1 | 34.8 | 34.8 | 32.2 | 10.0 |
| Radical-Polymerizable Unsaturated Monomer (a2) | Dicyclopentenyloxyethyl Methacrylate (a2-1) [g] | 434* | 434* | 434* | 832 | - |
| | Methoxyethyl Methacrylate (a2-2) [g] | - | - | - | 576* | - |
| | Phenoxyethyl Methacrylate (a2-3) [g] | 670 | 547 | - | - | - |
| | Diethylene Glycol Dimethacrylate (a2-4) [g] | - | 290 | | | |
| | Isobornyl Methacrylate (a2-5) [g] | - | - | 837 | - | - |
| | N-lauryl methacrylate (a2-6) [g] | - | - | - | 448 | - |
| | Methyl Methacrylate (a2-7) [g] | - | - | - | 96 | - |
| | Trimethylolpropane Trimethacrylate (a2-8) [g] | - | - | - | - | 19638 |
| Proportion [% by mass] of (a2) to (a1) + (a2) | | 61.9 | 65.2 | 65.2 | 67.8 | 90.0 |
| Other Monomer | Acryloylmorpholine [g] | 167 | - | - | 320* | - |
| Wax | Paraffin Wax 125°F [g] | 1.1 | 1.1 | 1.1 | - | - |
| | Paraffin Wax 115°F [g] | - | - | - | - | 200 |
| Polymerization Catalyst | 2,4,6-Tris(dimethylaminomethyl)phenol [g] | 2.0 | 2.0 | 2.0 | - | - |
| | Dibutyltin Dilaurate [g] | - | - | - | 0.08 | - |
| Polymerization Inhibitor | Methylhydroquinone [g] | 0.3 | 0.3 | 0.3 | - | 0.6 |
| | Hydroquinone [g] | - | - | - | 0.3 | - |

| | | | | | | |
|---|---|---|---|---|---|---|
| *: Corresponding components added in synthesizing radical-polymerizable resin (a1) are contained. Dicyclopentenyloxyethyl methacrylate (a2-1): Fancryl FA-512MT, by Showa Denko Materials Co., Ltd. Methoxyethyl methacrylate (a2-2) : Acryester MT, by Mitsubishi Chemical Corporation Phenoxyethyl methacrylate (a2-3) : Light Ester PO, by Kyoeisha Chemical Co., Ltd. Diethylene glycol dimethacrylate (a2-4): Light Ester 2EG, by Kyoeisha Chemical Co., Ltd. Isobornyl methacrylate (a2-5): Light Ester IB-X, by Kyoeisha Chemical Co., Ltd. N-lauryl methacrylate (a2-6): Light Ester L, by Kyoeisha Chemical Co., Ltd. Methyl methacrylate (a2-7) : Acryester M, by Mitsubishi Chemical Corporation Trimethylolpropane trimethacrylate (a2-8) : Light Ester TMP, by Kyoeisha Chemical Co., Ltd. Acryloylmorpholine : ACMO, by KJ Chemical Corporation Paraffin wax 125°F : by Nippon Seiro Co., Ltd. Paraffin wax 115°F : by Nippon Seiro Co., Ltd. 2,4,6-tris(dimethylaminomethyl)phenol: Seikuol TDMP, by Seiko Chemical Co., Ltd. Dibutyltin dilaurate: KS-1260, by Kyodo Chemical Industry Co., Ltd. Methyl hydroquinone: by Tokyo Chemical Industry Co., Ltd. Hydroquinone: by Tokyo Chemical Industry Co., Ltd. | | | | | | |

### <3. Examples>

### <3-1. Examples 1 to 5>

### (Preparation of materials for use for repairing)

The components shown in Table 2 were left in an atmosphere at 20 ± 5°C for 24 hours, then the temperature was kept constant, and these were mixed to prepare radical-polymerizable resin compositions A1 to A5, repairing materials X1 to X5, and a curable resin composition C1. Using the radical-polymerizable resin compositions A1 to A5, the repairing materials X1 to X5, and the curable resin composition C1 thus prepared, concrete plates were repaired according to the process mentioned below in an environment at 20 ± 5°C in Examples.

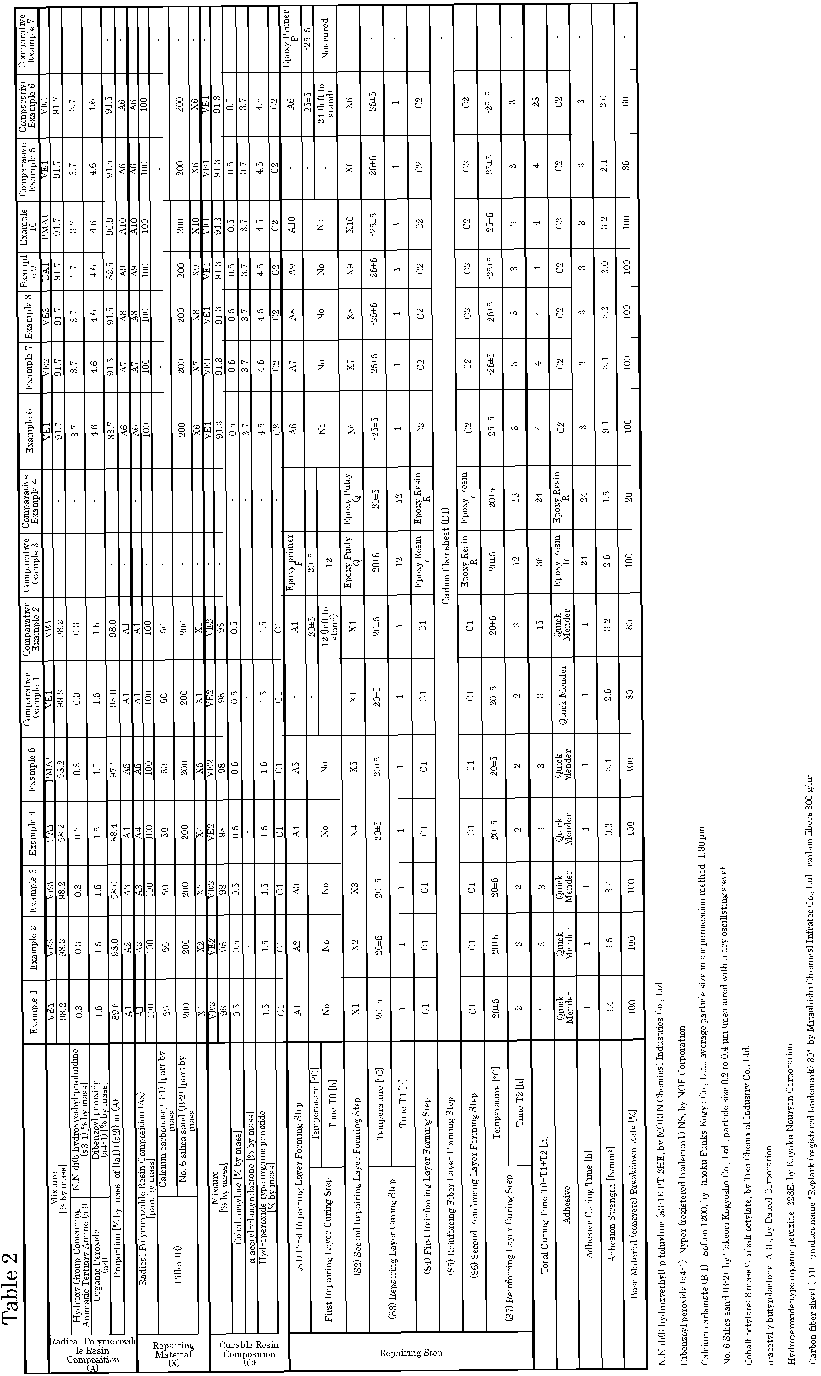

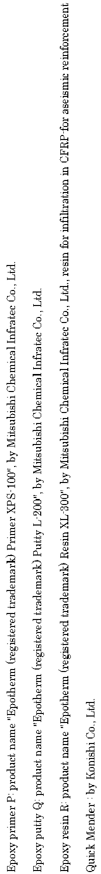

### (Repairing of Concrete Plate)

The repairing methods in Examples 1 to 5 are all based on the first embodiment (Fig. 1). The radical-polymerizable resin compositions A1 to A5, and the repairing materials X1 to X5 used in each step in Examples 1 to 5 are as shown in Table 2. The curable resin composition C1 and the carbon fiber sheet D1 used in the reinforcing step are common in Examples 1 to 5.

Using a brush, any of the radical-polymerizable resin compositions A1 to A5 was applied to the surface of a concrete sheet from which the laitance layer had been removed, in a coating amount of 200 g/m² to form a first repairing layer, and immediately before curing of the first repairing layer, using a trowel, any of the repairing material X1 to X5 was applied to the layer in a coating amount of 18 kg/m² to form a second repairing layer. Subsequently, the first repairing layer and the second repairing layer were left to stand at 20 ± 5°C to be cured. After cured, the thickness of the repairing layer was 10 mm. The time T1 [h] taken for curing the repairing layer is shown in Table 2. For confirming curing of the repairing layer, the layer was checked for absence of finger mark by finger-touch, that is, no plastic deformation of the repairing layer was confirmed by finger-touch check. (The same shall apply to curing check hereinunder.)

Using a brush, the curable resin composition C1 was applied to the cured repairing layer in a coating amount of 400 g/m² to form a first reinforcing layer. The carbon fiber sheet D1 was stuck to the first reinforcing layer to from a reinforcing fiber layer. Using a roller, the curable resin composition C1 was applied to the reinforcing fiber layer in a coating amount of 300 g/m² to form a second reinforcing layer. Subsequently, the curable resin composition C1 contained in the first reinforcing layer and the second reinforcing layer was cured. For curing, the layers were left at 20 ± 5°C. The time T2 [h] taken for curing the reinforcing layers is shown in Table 2.

### <3-2. Comparative Examples 1 to 2>

In Comparative Example 1, a concrete plate was repaired in the same manner as in Example 1 except that the first repairing layer forming step S1 was omitted. The curing time T1 [h] for the repairing layer and the curing time T2 [h] for the reinforcing layers are shown in Table 2.

In Comparative Example 2, a concrete plate was repaired in the same manner as in Example 1 except that, after the first repairing layer forming step and before the second repairing layer forming step, the first repairing layer was left at 20 ± 5°C for 12 hours (in this Comparative Example, this was left for a longer period of time than the predicted curing time for the radical-polymerizable resin composition (A)). After left, the first repairing layer was confirmed to be cured by finger-touch check. The time T0 [h] for which the first repairing layer was left, the time T1 [h] taken for curing the second repairing layer, and the time T2 [h] taken for curing the reinforcing layer are shown in Table 2.

### <3-3. Comparative Example 3 to 4>

In Comparative Example 3, the main ingredient and the curing agent in each of Epoxy primer P (product name "Epotherm (registered trademark) Primer XPS-100", by Mitsubishi Chemical Infratec Co., Ltd.), Epoxy putty Q (product name "Epotherm (registered trademark) Putty L-200", by Mitsubishi Chemical Infratec Co., Ltd.) and Epoxy resin R (product name "Epotherm (registered trademark) Resin XL-300", by Mitsubishi Chemical Infratec Co., Ltd., resin for infiltration in CFRP-for aseismic reinforcement) were left at 20 ± 5°C for 24 hours. Subsequently, a concrete plate was repaired according to the following process in an environment of 20 ± 5°C.

Using a brush, Epoxy Primer P, in which the main ingredient and the curing agent had been mixed, was applied to the surface of a concrete sheet from which the laitance layer had been removed, in a coating amount of 200 g/m² to form a first repairing layer (primer layer). Subsequently, the first repairing layer was left at 20 ± 5°C to be cured. The time T0 [h] taken for curing the first repairing layer is shown in Table 2.

Using a rubber spatula, Epoxy Putty Q, in which the main ingredient and the curing agent had been mixed, was applied to the surface of the cured first repairing layer in a coating amount of 18 kg/m² to form a second repairing layer. Subsequently, the second repairing layer was left at 20 ± 5°C to be cured. The time T1 [h] taken for curing the second repairing layer is shown in Table 2.

Using a roller, Epoxy Resin R, in which the main ingredient and the curing agent had been mixed, was applied to the surface of the cured second repairing layer in a coating amount of 400 g/m² to form a first reinforcing layer. The same carbon fiber sheet as that used in Examples 1 to 5 was stuck to the first reinforcing layer to form a reinforcing fiber layer. Using a roller, Epoxy resin R was applied to the reinforcing fiber layer in a coating amount of 300 g/m² to form a second reinforcing layer. Subsequently, Epoxy Resin R contained in the first reinforcing layer and the second reinforcing layer was cured. For curing, the layers were left at 20 ± 5°C. The time T2 [h] taken for curing the reinforcing layers is shown in Table 2.

In Comparative Example 4, a concrete plate was repaired in the same manner as in Comparative Example 1, except that the first repairing layer in Comparative Example 3 was not formed. The time T1 [h] taken for curing the repairing layer and the time T2 [h] taken for curing the reinforcing layers are shown in Table 2.

### <3-4. Examples 6 to 10>

In Examples 6 to 10, the components shown in Table 2 were left in an atmosphere at -25 ± 5°C for 24 hours, then the temperature was kept constant, and these were mixed to prepare radical-polymerizable resin compositions A6 to A10, repairing materials X6 to X10, and a curable resin composition C2.

In Examples 6 to 10, concrete plates were repaired according to the same process as in Example 1 except that the temperature in the repairing layer curing step and the reinforcing layer curing step was -25 ± 5°C. The radical-polymerizable resin compositions A6 to A10, and the repairing materials X6 to X10 used in the steps in Examples 6 to 10 are as shown in Table 2. The curable resin composition C2 and the carbon fiber sheet D1 used in the reinforcing step are common in Examples 6 to 10. The time T1 [h] and the time T2 [h] taken for curing the repairing layer and the reinforcing layer in each Example are shown in Table 2.

### <3-5. Comparative Examples 5 to 6>

In Comparative Example 5, a concrete plate was repaired in the same manner as in Example 6, except that the first repairing layer forming step S1 was omitted. The time T1 [h] taken for curing the repairing layer and the time T2 [h] taken for curing the reinforcing layers are shown in Table 2.

In Comparative Example 6, a concrete plate was repaired in the same manner as in Example 6 except that, after the first repairing layer forming step and before the second repairing layer forming step, the first repairing layer was left at -25 ± 5°C for 24 hours (in this Comparative Example, this was left for a longer period of time than the predicted curing time for the radical-polymerizable resin composition (A)). After left, the first repairing layer was confirmed to be cured by finger-touch check. The time T0 [h] for which the first repairing layer was left, the time T1 [h] taken for curing the second repairing layer, and the time T2 [h] taken for curing the reinforcing layer are shown in Table 2.

### <3-6. Comparative Example 7>

In Comparative Example 7, using a brush, Epoxy Primer P (this is the same as that used in Comparative Example 3), in which the main ingredient and the curing agent had been mixed, was applied to the surface of a concrete substrate from which the laitance layer had been removed, in a coating amount of 200 g/m² to form a first repairing layer. Subsequently, the first repairing layer was tried to be cured at -25 ± 5°C, but after 7 days, the coating film was not cured, and therefore, the subsequent steps were omitted.

### <4. Evaluation Methods>

### <4-1. Overall Curing Time>

In Examples and Comparative Examples except Comparative Examples 2 and 3 and Comparative Example 7, the total of the repairing layer curing time T1 and the reinforcing layer curing time T2, T1+T2, was calculated as an overall curing time; and in Comparative Examples 2 and 3, the total of the first repairing layer leaving or curing time T0, the repairing layer curing time T1 and the reinforcing layer curing time T2, T0+T1+T2, was calculated as an overall curing time. Thus calculated, the overall curing time is shown in Table 2. In Comparative Example 7, the coating film was not cured, and therefore the overall curing time could not be calculated.

### <4-2. Concrete Adhesion Test>

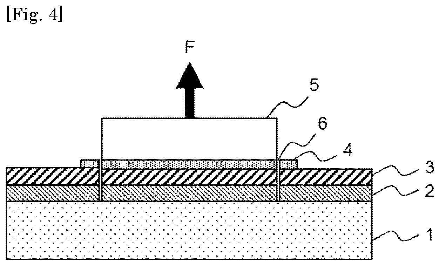

Fig. 4 is a view showing a method of a concrete adhesion test. The cured repairing layer 2 and the cured reinforcing layer 3 (hereinunder these may be referred to as "repairing layer 2" and "reinforcing layer 3" in this section) formed on the concrete plate 1 in each of Examples 1 to 10 and Comparative Examples 1 to 6 were tested in a concrete adhesion test according to an adhesion strength test method by Building Research Institute of National Research and Development Agency. This is described specifically hereunder.

Using an adhesive 4, a metal attachment 5 (bottom 4 cm × 4 cm, footprint 1600 mm²) was attached to the surface of the reinforcing layer 3. As the adhesive 4, Quick Mender (by Konishi Co., Ltd.) was used in Examples 1 to 5 and Comparative Examples 1 and 2, and the curing time for the adhesive 4 was 1 hour. In Comparative Examples 3 and 4, the same Epoxy Resin R as that used in integrating with the carbon fiber sheet for the reinforcing layer 3 was used, and the curing time for the adhesive 4 was 24 hours. In Examples 6 to 10 and Comparative Examples 5 and 6, the same curable resin composition C2 as that used in integrating with the carbon fiber sheet for the reinforcing layer 3 was used, and the curing time for the adhesive 4 was the same as the time T2 taken for curing in forming the reinforcing layer 3, that is, 3 hours.

After the adhesive 4 was cured, a slit 6 was made along the outer periphery of the attachment 5 to a depth that could reach the concrete plate 1, using a cutter. Subsequently, the attachment 5 was pulled vertically (in the direction of the arrow F in Fig. 4) relative to the surface of the reinforcing layer 3, and the maximum load [N] at breakage was divided by the footprint 1600 [mm²] of the attachment 5 to give the adhesion strength [N/mm²].

Of the region of the concrete plate 1 to which the attachment 5 was attached, the area of the part in which the concrete plate 1 was broken was measured, and the proportion of the area to the footprint 1600 [mm²] of the attachment 5 was calculated to be a base material (concrete) breakdown rate [%]. The area of the part in which the concrete plate 1 was broken was determined as follows. The part to which the attachment 5 was attached was divided into meshes of 10 mm × 10 mm each, and the part occupied by the broken part of the concrete plate 1 in each mesh was approximated to a triangle, a square or a figure of a combination of these, and the area thereof was measured. A total of the areas of each mesh is considered to be the concrete plate broken part. The adhesion strength [N/mm²] and the base material breakdown rate [%] in Examples and Comparative Examples except Comparative Example 7 are shown in Table 2.

### <5. Evaluation Results>

From Table 2, it is known that, in a range of 20 ± 5°C in Examples 1 to 5, and in a range of -25 ± 5°C in Examples 6 to 10, a short overall curing time, a high adhesion strength and a high base material breakdown rate are achieved. It can be said that a larger adhesion strength value and a higher base material breakdown rate mean that a strong adhesion was attained between concrete and the cured repairing layer and between the cured repairing layer and the cured reinforcing layer.

As opposed to these, in Comparative Example 3 in which Epoxy Primer P was used in the first repairing layer forming step and Epoxy Putty Q was sued in the second repairing layer forming step, and these layers were cured at 20 ± 5°C, the overall curing time was long. Different from Comparative Example 3, in Comparative Example 4, in which the first repairing layer was not formed, the overall curing time was long, and the adhesion strength and the base material breakdown rate were low. In Comparative Example 7 in which Epoxy Primer P was tried to be cured at -25 ± 5°C to form a first repairing layer, Epoxy Primer P could not be cured at such a low temperature.

In Comparative Example 1 in which a first repairing layer was not formed, the adhesion strength and the base material breakdown rate were low as compared with those in Examples 1 to 5. This may also apply to comparison between Comparative Example 5 in which a first repairing layer was not formed, and Examples 6 to 10. Accordingly, it is known that, by coating with the radical-polymerizable resin composition (A) prior to the second repairing layer forming step, that is, prior to coating with the repairing material (X), concrete and the repairing layer can be firmly adhered.

In Comparative Example 2 in which the first repairing layer was cured prior to the second repairing layer forming step S2, the adhesion strength and the base material breakdown rate were low as compared with those in Examples 1 to 5. This may also apply to comparison between Comparative Example 6 in which the first repairing layer was cured, and Examples 6 to 10. Accordingly, it is known that, by forming the second repairing layer prior to curing of the first repairing layer, the construction period can be shortened and, in addition, concrete and the cured repairing layer can be firmly adhered.

From the above, it is known that, according to the structure repairing method that includes a first repairing layer forming step of applying a radical-polymerizable resin composition (A) to a structure to form a first repairing layer, a second repairing layer forming step of applying a repairing material (X) containing a radical-polymerizable resin composition (Ax) and a filler (B) to the first repairing layer before the first repairing layer is cured, thereby forming a second repairing layer, and a repairing layer curing step of curing the radical-polymerizable resin composition (A) and the radical-polymerizable resin composition (Ax), wherein the radical-polymerizable resin composition (A) and the radical-polymerizable resin composition (Ax) each contain at least one radical-polymerizable resin (a1) selected from the group consisting of a vinyl ester resin, an urethane (meth)acrylate resin and a polyester (meth)acrylate resin, at least one radical-polymerizable unsaturated monomer (a2) selected from the group consisting of a mono(meth)acrylate, a di(meth)acrylate and a tri(meth)acrylate, a hydroxy group-containing aromatic tertiary amine (a3) represented by the general formula (I), and an organic peroxide (a4), the total content of the radical-polymerizable resin (a1) and the radical-polymerizable unsaturated monomer (a2) in each of the radical-polymerizable resin composition (A) and the radical-polymerizable resin composition (Ax) is 75% by mass or more, and both the radical-polymerizable resin composition (A) and the radical-polymerizable resin composition (Ax) do not contain a filler, and when applied to concrete structures, the structure repairing method ensures a short construction period and high reliability in a wide temperature range.

### Reference Signs List

1: Concrete Plate
2: Repairing Layer
3: Reinforcing Layer
4: Adhesive
5: Attachment
6: Slit

## Claims

1. A structure repairing method comprising a first repairing layer forming step of applying a radical-polymerizable resin composition (A) to a structure to form a first repairing layer,
a second repairing layer forming step of applying a repairing material (X) containing a radical-polymerizable resin composition (Ax) and a filler (B) to the first repairing layer before the first repairing layer is cured, thereby forming a second repairing layer, and
a repairing layer curing step of curing the radical-polymerizable resin composition (A) and the radical-polymerizable resin composition (Ax); wherein:
the radical-polymerizable resin composition (A) and the radical-polymerizable resin composition (Ax) each contain at least one radical-polymerizable resin (a1) selected from the group consisting of a vinyl ester resin, an urethane (meth)acrylate resin and a polyester (meth)acrylate resin, at least one radical-polymerizable unsaturated monomer (a2) selected from the group consisting of a mono(meth)acrylate, a di(meth)acrylate and a tri(meth)acrylate, a hydroxy group-containing aromatic tertiary amine (a3) represented by the following general formula (I), and an organic peroxide (a4),
the total content of the radical-polymerizable resin (a1) and the radical-polymerizable unsaturated monomer (a2) in each of the radical-polymerizable resin composition (A) and the radical-polymerizable resin composition (Ax) is 75% by mass or more, and
both the radical-polymerizable resin compositions (A) and (Ax) do not contain a filler: 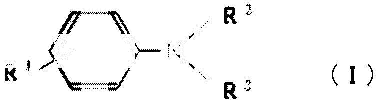
wherein R¹ represents H, CH₃ or OCH₃, R² represents a hydroxyalkyl group, R³ represents an alkyl group or a hydroxyalkyl group.

2. The structure repairing method according to claim 1, wherein the radical-polymerizable resin composition (A) and the radical-polymerizable resin composition (Ax) have the same formulation.

3. The structure repairing method according to claim 1 or 2, wherein the radical-polymerizable resin (a1) contains a vinyl ester resin, and the vinyl ester resin has an unsaturated bond bonding to at least any terminal of an epoxy polymer via an ester bond.

4. The structure repairing method according to claim 3, wherein the unsaturated bond is at least one selected from the group consisting of a vinyl group, an allyl group, a (meth)acryloyl group, and a (meth)acryloyloxy group.

5. The structure repairing method according to any one of claims 1 to 4, wherein the radical-polymerizable resin (a1) contains an urethane (meth)acrylate resin, and the urethane (meth)acrylate resin is a polyurethane having a (meth)acryloyl group at least at any terminal in the molecule and produced through polymerization of a diisocyanate and a linear glycol.

6. The structure repairing method according to any one of claims 1 to 5, wherein the radical-polymerizable resin (a1) contains a polyester (meth)acrylate resin, and the polyester (meth)acrylate resin is a polyester produced from at least any one of an aromatic dicarboxylic acid and an aliphatic saturated dicarboxylic acid, and a diol, and has a (meth)acryloyl group at least at any terminal of the molecular chain.

7. The structure repairing method according to any one of claims 1 to 6, wherein in the radical-polymerizable resin composition (A), the content of the radical-polymerizable resin (a1) relative to the total amount of the radical-polymerizable resin (a1) and the radical-polymerizable unsaturated monomer (a2) is 5 to 90% by mass.

8. The structure repairing method according to any one of claims 1 to 7, wherein the radical-polymerizable resin composition (A) contains the hydroxy group-containing aromatic tertiary amine (a3) in an amount of 0.1 to 10% by mass, and the organic peroxide (a4) in an amount of 0.1 to 10% by mass.

9. The structure repairing method according to any one of claims 1 to 8, wherein the repairing material (X) contains the filler (B) in an amount of 80 to 500 parts by mass relative to 100 parts by mass of the radical-polymerizable resin composition (Ax).

10. The structure repairing method according to any one of claims 1 to 9, wherein the filler (B) is an inorganic filler.

11. The structure repairing method according to any one of claims 1 to 10, further comprising a step of forming a reinforcing layer that contains a curable resin composition (C) and a fibrous material (D) on the second repairing layer, after the repairing layer curing step.

12. The structure repairing method according to claim 11, wherein the reinforcing step includes a first reinforcing layer forming step of applying a curable resin composition (C) to the second repairing layer to form a first reinforcing layer, a reinforcing fiber layer forming step of forming a reinforcing fiber layer that contains a fibrous material (D) on the first reinforcing layer, a second reinforcing layer forming step of applying a curable resin composition (C) to the reinforcing fiber layer to form a second reinforcing layer, and a reinforcing layer curing step of curing the curable resin composition (C) contained in the first reinforcing layer and the second reinforcing layer.

13. The structure repairing method according to claim 11 or 12, wherein the curable resin composition (C) contains at least one selected from the group consisting of a vinyl compound and an epoxy compound.

14. The structure repairing method according to claim 12 or 13, wherein the fibrous material (D) is a carbon fiber sheet.

15. The structure repairing method according to any one of claims 1 to 14, wherein the structure is a concrete structure.
